## Europäisches Patentamt

## European Patent Office

## Office européen des brevets

(11) Veröffentlichungsnummer: **0 151 775**

**B1**

(12) **EUROPÄISCHE PATENTSCHRIFT**

(45) Veröffentlichungstag der Patentschrift:
31.05.89

(21) Anmeldenummer: **84115882.7**

(22) Anmeldetag: **20.12.84**

(51) Int. Cl.⁴: **C 12 C 9/02**

(54) Verfahren zur Extraktion von Hopfeninhaltsstoffen.

(30) Priorität: **23.12.83 DE 3346776**

(43) Veröffentlichungstag der Anmeldung:
**21.08.85 Patentblatt 85/34**

(45) Bekanntmachung des Hinweises auf die Patenterteilung:
**31.05.89 Patentblatt 89/22**

(84) Benannte Vertragsstaaten:
**AT BE CH DE FR GB IT LI NL**

(56) Entgegenhaltungen:
**WO-A-83/00701**
**DE-B-2 127 618**
**GB-A-2 072 657**

**CHEMICAL ABSTRACTS, Band 93, Nr. 3, Juli 1980,
Seite 543, Nr. 24385a, Columbus, Ohio, US; E.
KRUEGER: "The use of carbon dioxide in the
manufacture of hop products", & MONATSSCHR.
BRAU. 1980, 33(3), 104-10
Monatschrift für Brauerei, 33 (1980), Seiten 11/12
The Brewer's Digest (September 1979), Seiten 45-48**

(73) Patentinhaber: **Hopfen- Extraktion HVG Barth,
Raiser und Co., Auenstrasse 18- 20, D-8069
Wolnzach (DE)**

(72) Erfinder: **Forster, Adrian, Dr. Dipl.- Ing.,
Schiessstättweg 10, D-8069 Wolnzach (DE)**
Erfinder: **Gehrig, Manfred Dr. Dipl.- Chem., Lug
ins Land 10, D-8069 Wolnzach (DE)**

(74) Vertreter: **Wager, Peter, Dr. Dipl.- Chem.,
Morassistrasse 8/II, D-8000 München 5 (DE)**

**Beschreibung**

Die Erfindung betrifft ein Verfahren zur Extraktion von Hopfen oder Hopfenprodukten mit überkritischer Kohlensäure bei Drücken bis zu 300 bar.

Gegenstand der Erfindung ist das im Anspruch 1 angegebene Verfahren.

Hopfen wird während des Brauvorganges in Form von Naturhopfen, (angereichertem) Hopfenpulver, Pellets oder als Extrakt dem Bier zugegeben und verleiht diesem die typische Hopfenbittere.

Extrakt ist wegen der erheblichen Verminderung des Volumens leichter transportierbar, billiger zu lagern und kann wegen der guten Haltbarkeit Ernteschwankungen ausgleichen. Außerdem ist Extrakt gut dosierbar. Aufgrund dieser Vorteile werden Hopfenextrakte schon seit längerer Zeit hergestellt. Als Lösungsmittel werden heute hauptsächlich Kohlenwasserstoffe, chlorierte Kohlenwasserstoffe und Alkohole, z. B. Hexan, Methylenchlorid und Äthanol, eingesetzt. Mit unpolaren Lösungsmitteln werden in erster Linie die Harzanteile erhalten. Zur Extraktion der Gerbstoffe muß sich deshalb eine wässrige Extraktion anschließen. Mit polaren Lösungsmitteln, wie Äthanol, werden bereits Teile der Gerbstoffe miterfaßt.

Die Lösungsmittel müssen weitestgehend aus den pastösen Extrakten ausgetrieben werden. Zwar sind die Restlösungsmittelgehalte sehr niedrig (z. B. bei Methylenchlorid unter 0.1 %), es darf aber nicht übersehen werden, daß der Verdacht, Methylenchlorid sei toxisch bzw. cancerogen, noch nicht endgültig entkräftet ist.

So werden in neuerer Zeit Versuche angestellt, mit einem physiologisch unbedenklichen Lösungsmittel, nämlich verdichtetem Kohlendioxid, Hopfen zu extrahieren. Unter Umgebungsbedingungen besitzen Gase keine Lösungsmitteleigenschaften. Unter erhöhtem Druck, im verflüssigten bzw. verdichteten Zustand, können Gase jedoch als Lösungsmittel eingesetzt werden. Unterhalb der kritischen Temperatur (31°C) kann durch Druckerhöhung gasförmiges Kohlendioxid verdichtet und - bei Erreichen des Dampfdruckes - verflüssigt werden.

Durch eine weitere Druckerhöhung kann schließlich die Flüssigkeit (in geringem Maß) weiter komprimiert werden. Oberhalb der kritischen Temperatur erfolgt der Übergang vom gasförmigen in den verdichteten Zustand bei Druckerhöhung kontinuierlich, d. h. ohne sprunghafte Zunahme der Dichte wie bei der Verdichtung unterhalb der kritischen Temperatur.

Aus der DE-OS-2 801 843 ist eine Extraktion von Hopfeninhaltsstoffen mit flüssigem Kohlendioxid bekannt, bei der man flüssiges Kohlendioxid bei -5 bis +15°C durch eine Säule von Hopfenmaterial leitet und hierdurch wenigstens einen Teil der im Hopfen enthaltenen alpha-Säuren in das flüssige Kohlendioxid extrahiert und anschließend einen Hopfenextrakt hoher Reinheit aus dem flüssigen Kohlendioxid gewinnt.

Mit verdichteter, flüssiger Kohlensäure (d. h. die Kohlensäure ist bezüglich der Temperatur unterkritisch, bezüglich des Druckes überkritisch) kann Hopfen gemäß der DE-AS-2 827 002 behandelt werden.

Schließlich ist es aus der DE-PS-2 127 618 bekannt, Hopfen mit in bezug auf Druck und Temperatur überkritischem $CO_2$ zu extrahieren. Es werden Extraktionsdrücke von 100 bis 400 bar und Extraktionstemperaturen bis zu 100°C angegeben. Andererseits wird aber (Spalte 4, Zeile 54 ff.) auch beschrieben, daß man sich nach der thermischen Belastbarkeit des Materials zu richten hat und deshalb bevorzugt zwischen 40 und 50°C extrahiert.

Tatsächlich besteht in der Fachwelt ein Vorurteil, Naturstoffe, wie z. B. Hopfen, hohen Temperaturen auszusetzen, weil Schädigungen durch chemische Reaktionen eintreten können.

Etliche Arbeiten befassen sich mit Veränderungen von Inhaltsstoffen durch Temperaturerhöhung beim Trocknen, Lagern und Pelletieren und zeigen, daß erhühte Temperaturen einen Abbau wichtiger Inhaltsstoffe bewirken.

Zwar schließt sich der Extraktion mit organischen Lösungsmitteln üblicherweise eine wässrige Extraktion wasserlöslicher Inhaltsstoffe bei Temperaturen nahe der Siedetemperatur des Wassers an. Diese zusätzliche Extraktion spricht jedoch nicht gegen das oben geschilderte Vorurteil gegen hohe Temperaturen, weil die empfindlichen Inhaltsstoffe bereits entfernt sind.

Auch eine aus der DE-PS-489 719 bekannte Extraktionsweise spricht nicht gegen dieses Vorurteil. Bei dieser Extraktion werden bei 120 - 130°C die wasserdampfflüchtigen Bestandteile abdestilliert, dann wird der Rückstand in einer Zuckerlösung ausgekocht. Ein solcherart erhaltenes Produkt entspricht eher einem wässrigen Auszug und weicht in seiner Zusammensetzung von einem Harzextrakt ab, welcher mit organischen Lösungsmitteln bzw. $CO_2$ gewonnen wurde.

Aus WO-A-83/00 701 ist zwar ferner die Behandlung von durch Extraktion mit Kohlendioxid bei unterkritischer Temperatur und überkritischem Druck erhaltenem Hopfenextrakt mit Adsorptionsmitteln und Kohlendioxid von hohem Druck und einer Temperatur von bis zu 110°C bekannt, doch dient diese Behandlung der Isomerisierung der im Extrakt enthaltenen alpha-Säuren zu Iso-alpha-Säuren. Die Zusammensetzung des Hopfenextraktes wird dabei bewußt verändert.

Schließlich steigt gemäß einer Veröffentlichung von E. Krüger ("The Use of $CO_2$ in the Manufacture of Hop Products") in "Monatsschrift für Brauerei" **33**, Nr. 3 (1980), in der optimale Parameter für die Hopfenextraktion bei Temperaturen von 21 bis 80°C beschrieben werden, die Ausbeute an alpha-Säuren nicht kontinuierlich mit steigender Temperatur, sondern nimmt im Gegenteil von einem bestimmten Wert an plötzlich ab. Es wird daher auch hier vorgeschlagen, bei unterkritischer Temperatur und überkritischem Druck zu arbeiten. Die unter diesen Bedingungen nicht extrahierbaren Hartharze mit etwa 10 % Anteil am Bitterpotential des Hopfens müssen allerdings durch eine zusätzliche Heißwasserextraktion gewonnen werden, was einen erheblichen Nachteil des Verfahrens darstellt. Um so überraschender war es daher, daß die Extraktion gemäß der Erfindung mit überkritischem Kohlendioxid bei über 100°C, insbesondere bei 110 bis 150°C, einen hochwertigen Harzextrakt ergibt. Ohne den Nachteil eines Restgehaltes an Lösungsmittel aufzuweisen, ist dieser Extrakt in seiner Zusammensetzung einem mit Methylenchlorid gewonnenen Extrakt ähnlich. Mit Methylenchlorid und gemäß dem erfinderischen Verfahren werden darüber hinaus ähnliche Gesamtausbeuten gewonnen. Gegenüber einem Extrakt gemäß der DE-PS-2 127 618 werden im Rahmen der höheren Gesamtausbeute zusätzliche Hopfeninhaltsstoffe extrahiert, welche von den üblichen Analysenmethoden (Mebak) miterfaßt werden und die die potentielle Bierbittere erhöhen. Somit wird der Vorwurf der mangelnden Vollmundigkeit gegenüber den mit konventionellem $CO_2$-Extrakt gebrauten Bieren hinfällig.

Weiterhin wird im Vergleich zum Verfahren gemäß der DE-PS-2 127 618 trotz der bei hohen Temperaturen niedrigeren Dichte des Kohlendioxids die Bearbeitungszeit verkürzt.

Da Apparaturen zur Extraktion mit verdichteten Gasen weitgehend bekannt sind, soll im folgenden nur das Verfahren kurz beschrieben werden:

Verdichtetes und komprimiertes Kohlendioxid durchströmt in einem Druckbehälter vorgelegtes Ausgangsmaterial (z. B. Naturhopfen, Hopfenpulver, angereicherte Pellets) und belädt sich mit den extrahierbaren Inhaltsstoffen. In einem zweiten Verfahrensschritt wird das Gemisch aus Lösungsmittel und Gelöstem aufgetrennt. Dazu muß die Lösefähigkeit des Lösungsmittels drastisch vermindert werden z. B. durch Dichteerniedrigung, durch Verdünnen mit einem schlechteren Lösungsmittel (z. B. $N_2$, Ar) oder durch Adsorption (an z. B. Bentonit). Das gereinigte Lösungsmittel wird dann abgezogen und dem Kreislauf wieder zugeführt. Der Extrakt kann aus dem Abscheidebehälter über ein Ventil abgeführt werden.

Das Verfahren ist bezüglich des Lösungsmittels kontinuierlich, bezüglich des Ausgangsstoffes absatzweise. Vorteilhaft wird eine vollständig kontinuierliche Extraktion angestrebt, z. B. durch Verwendung mehrerer Extraktionsbehälter oder durch Einschleusen des Extraktionsgutes in den Hochdruckbehälter.

Die folgenden Beispiele sollen die Verfahrensweise gemäß der Erfindung sowie deren Vorteile im Vergleich zum Stand der Technik verdeutlichen. Prozentangaben beziehen sich auf das Gewicht.

Für die Versuche wurde Hopfen der Sorte Hallertauer Nordbrauer des Jahrganges 1981 verwendet. Jeweils 80 kg der angereicherten Pellets (Typ 45) wurden gemahlen und im Extraktionsbehälter vorgelegt. Die Ergebnisse stellen das Mittel aus mindestens zwei Versuchen dar und wurden durch erschöpfende Extraktion gewonnen.

In der am Ende der Beschreibung aufgeführten Tabelle I sind neben Extraktionsdruck und -temperatur die Ausbeute an Extrakt (A (%) = 100 x Extraktmenge/Hopfenmenge) und die relative Ausbeute der wichtigsten Inhaltsstoffe aufgeführt.

Die analysierten Inhaltsstoffe waren die Gesamtharze (GH), die Weichharze (WH), die Hartharze (HH = GH-WH) und die durch den Konduktometerwert (KW) erfaßbaren Bestandteile, sämtlich nach Wöllmer bzw. Mebak gemessen. Die Gehalte an spezifischen alpha- und beta-Säuren wurden durch Hochdruck-Flüssigkeitschromatographie gewonnen. Die Zahlen sagen aus, welcher Anteil des untersuchten Stoffes relativ zum Ausgangshopfen ( = 100 %) im Extrakt wiedergefunden wurde.

**Vergleichsbeispiel 1:**

Gemäß der Lehre der DE-DS-2 801 843 wurde der Hopfen bei 8°C und 65 bar während 6 Stunden erschöpfend extrahiert. Die Abtrennung erfolgte durch Verdampfen das flüssigen $CO_2$ in einem Wärmetauscher, worauf sich das Gelöste abschied.

Es wurden 20.9 % des Hopfens als Extrakt befunden. Vom Gesamtharz, dem Hartharz, dem Weichharz und den durch den Konduktometerwert erfaßten alpha-Säuren des Ausgangshopfens fanden sich 68, 2, 79 und 79 % im Extrakt wieder.

**Vergleichsbeispiel 2:**

Bei 300 bar und 50°C (siehe DE-PS-2 127 618) wurde der Hopfen während 5 Stunden extrahiert. Die Abtrennung des Gelösten erfolgte durch Entspannung des Lösungsmittels auf 60 bar. Nunmehr wurden 26.5 % als Extrakt gewonnen. Vom Gesamtharz, dem Hartharz, dem Weichharz und den durch den Konduktometerwert erfaßbaren Bestandteilen der Pellets wurden 83, 14, 95 bzw. 92 % im Extrakt nachgewiesen. Spezifische alpha- und beta-Säuren fanden sich zu 98 bzw. 97 % im Extrakt.

**Vergleichsbeispiel 3:**

Durch Extraktion mit Methylenchlorid in einem Labor-Soxhlet-Extraktionsapparat wurde eine Ausbeute von 31.1 % erzielt.

Von den Gesamtharzen, den Hart- und Weichharzen, den durch den Konduktometerwert erfaßten Anteilen sowie den spezifischen alpha- und beta-Säuren waren 96, 88, 97, 100, 99 bzw. 97 % in den Extrakt gelangt

**Beispiel:**

Der Hopfen wurde gemäß der Erfindung bei einem Druck von 300 bar und einer Temperatur von 120°C während 3 Stunden erschöpfend extrahiert. Die Extraktabscheidung erfolgte wiederum durch Entspannen des Lösungsmittels auf 60 bar bei 40°C.

Nunmehr wurden 30.4 % des Ausgangshopfens als Extrakt gefunden. Gegenüber der Extraktion bei 300 bar und 50°C bedeutet das eine nicht unerhebliche Steigerung von 15 %.

Die Weichharze und die durch den Konduktometerwert erfaßbaren Bestandteile finden sich zu jeweils 98 % im Extrakt. Entscheidend ist die Ausbeutesteigerung der Gesamtharze auf 95 %, welche größtenteils auf die vermehrte Extraktion der Hartharze zurückzuführen ist.

In der Tabelle II sind der Gehalt der gemäß den obigen Beispielen gewonnenen Extrakte an spezifischen alpha-Säuren und den durch den Konduktometerwert erfaßten Bestandteilen sowie die universellen Bitterwerte (UBW) zusammengestellt. Von den drei Größen zeigen der Konduktometerwert und der UBW die höchste Korrelation mit der Bitterkraft des Hopfens bzw. der Hopfenprodukte. Das Produkt aus der Ausbeute (Gew.-%) und dem UBW (mg/g) stellt die potentielle Bierbittere dar, die mit einem Extraktionsverfahren aus Hopfen gewonnen werden kann, und ist dar für die Fähigkeit zur Bitterung des Bieres entscheidende Faktor.

Obwohl also, wie aus der Tabelle II ersichtlich, in den Vergleichsbeispielen 1 (unterkritische Extraktion) und 2 (überkritische Extraktion) die Gehalte an spezifischen alpha-Säuren und durch den Konduktometerwert erfaßten Anteilen höher sind, verglichen mit dem Beispiel gemäß der Erfindung und Vergleichsbeispiel 3, nimmt doch die Bitterkraft leicht zu.

Vollends deutlich wird dann der Vorteil der erfindungsgemäßen Verfahrensweise durch den Vergleich der Werte des Produktes aus UBW und Ausbeute. Ohne also den Nachteil der Verwendung von Methylenchlorid in Kauf nehmen zu müssen, wird durch das erfindungsgemäße Verfahren gegenüber dem Stand der Technik eine leichte Zunahme des universellen Bitterwertes und eine deutliche Zunahme der potentiellen Bierbittere erreicht.

**Tabelle I:**

Exraktionsausbeute und in den Extrakten nach unterschiedlichen Extraktionsverfahren gefundene prozentuale Anteile wichtiger Inhaltsstoffe, bezogen auf Ausgangshopfen (HNB 1981, Typ 45).

| | Druck/bar | Temp/°C | Aus-beute/% | GH | HH | WH | KW | Spezif. Alpha-Säuren | Spezif. Beta-Säuren |
|---|---|---|---|---|---|---|---|---|---|
| Vergleichs-beispiel 1 | 65 | 8 | 20.9 | 68 | 2 | 79 | 79 | 90 | 92 |
| Vergleichs-beispiel 2 | 300 | 50 | 26.5 | 83 | 14 | 95 | 92 | 98 | 97 |
| Beispiel | 300 | 120 | 30.4 | 95 | 73 | 98 | 98 | 99 | 98 |
| Vergleichs-beispiel 3 | Methylenchlorid-Soxhlet-Extraktion | | 31.1 | 96 | 88 | 97 | 100 | 99 | 97 |

**Tabelle II:**

Extraktionsausbeute, spezifische und konduktometrisch bestimmte Gehalte (%) an alpha-Säuren sowie universelle Bitterwerte der nach verschiedenen Verfahren gewonnenen Extrakte

| | Ausbeute Gew.-% | Spezif. alpha-Säuren Gew.-% | KW Gew.-% | UBW mg/g | UBWX Ausbeute |
|---|---|---|---|---|---|
| Vergleichs-beispiel 1 | 20.9 | 53.8 | 51.8 | 332 | 6939 |
| Vergleichs-beispiel 2 | 26.5 | 46.2 | 47.6 | 343 | 9090 |
| Beispiel | 30.4 | 40.7 | 44.2 | 361 | 11010 |
| Vergleichs-beispiel 3 | 31.1 | 39.8 | 44.1 | 364 | 11320 |

## EP 0 151 775 B1

**Patentansprüche**

1. Verfahren zur Gewinnung von Extrakten aus Hopfen durch Extraktion von Hopfen, Hopfenpulver oder Hopfenpellets mit überkritischem Kohlendioxid bei Drücken bis zu 300 bar und Abscheiden der Extrakte aus der erhaltenen Lösung durch Verminderung des Lösungsvermögens des Kohlendioxids, dadurch gekennzeichnet, daß man bei Temperaturen oberhalb von 100°C extrahiert.

2. Verfahren nach Anspruch 1, dadurch gekennzeichnet, daß man bei 110° bis 150°C extrahiert.

3. Verfahren nach Anspruch 1 oder 2, dadurch gekennzeichnet, daß man die Verminderung des Lösungsvermögens des Kohlendioxids durch Dichteerniedrigung, Verdünnen mit einem schlechteren Lösungsmittel oder durch Adsorption durchführt.

**Claims**

1. Process for obtaining extracts from hops by the extraction of hops, hop powder or hop pellets with supercritical carbon dioxide under pressures of up to 300 bar and separation of the extracts from the obtained solution by reduction of the dissolving power of the carbon dioxide, characterized in that the extraction is carried out at a temperature of above 100°C.

2. Process according to Claim 1 characterized in that the extraction is carried out between 110° and 150°C.

3. Process according to Claims 1 or 2, characterized in that the reduction of the dissolving power of the carbon dioxide is carried out by reduction of density, dilution with a solvent with lower dissolving power, or by adsorption.

**Revendications**

1. Procédé pour l'obtention d'extraits de houblon par extraction du houblon, de la poudre de houblon ou de comprimés de houblon par du dioxyde de carbone supercritique sous pression jusqu'à 300 bars et séparation des extraits de la solution obtenue par diminution de la capacité dissolvante du dioxyde de carbone, caractérisé en ce qu'on extrait à des températures au-dessus de 100°C.

2. Procédé selon la revendication 1, caractérisé en ce qu'on extrait à une température de 110 à 150°C.

3. Procédé selon la revendication 1 ou 2, caractérisé en ce qu'on exécute la diminution de la capacité dissolvante du dioxyde de carbone par diminution de la densité, dilution par un solvant de qualité inférieure ou adsorption.

5